# EUROPÄISCHE PATENTANMELDUNG

(11) **EP 3 932 640 A1**
(43) Veröffentlichungstag der Anmeldung: **05.01.2022**
(21) Anmeldenummer: 21178434.3
(22) Anmeldetag: 09.06.2021
(51) Int. Cl.: B29B 7/24, B29B 7/94, B29B 7/18, B29B 7/74

(54) **VORRICHTUNG UND VERFAHREN ZUM HERSTELLEN EINER KAUTSCHUKMISCHUNG**

(30) Priorität: 03.07.2020 DE 102020208354
(71) Anmelder: Continental Reifen Deutschland GmbH, 30165 Hannover (DE)
(72) Erfinder: Glöckner, Andreas, 30419 Hannover (DE); Rennmann, Tim, 30419 Hannover (DE)
(74) Vertreter: Continental Corporation

(57) **Zusammenfassung**

Vorrichtung (10) zum Herstellen einer Kautschukmischung, insbesondere einer Kautschukgrundmischung (KGM), für die Produktion eines Fahrzeugreifens, mit einer ersten und einer zweiten Mischeinrichtung (12a, 12b), welche jeweils eine Mischkammer (14a, 14b) und ein Mischaggregat (16a, 16b) zum Mischen eines sich in der Mischkammer (14a, 14b) befindenden Materials umfassen, einer Übergabeeinrichtung (28), mittels welcher die Mischkammer (14b) der zweiten Mischeinrichtung (12b) direkt mit Material aus der Mischkammer (14a) der ersten Mischeinrichtung (12a) beschickbar ist, und einem Flüssigkeitseinleitsystem (36), mittels welchem Flüssigkeit (F) in die Mischkammer (14b) der zweiten Mischeinrichtung (12b) einleitbar ist.

## Beschreibung

Die Erfindung betrifft eine Vorrichtung zum Herstellen einer Kautschukmischung, insbesondere einer Kautschukgrundmischung, für die Produktion eines Fahrzeugreifens. Die Kautschukmischung umfasst eine erste und eine zweite Mischeinrichtung, welche jeweils eine Mischkammer und ein Mischaggregat zum Mischen eines sich in der Mischkammer befindenden Materials aufweisen. Außerdem umfasst die Vorrichtung eine Übergabeeinrichtung, mittels welcher die Mischkammer der zweiten Mischeinrichtung direkt mit dem Material aus der Mischkammer der ersten Mischeinrichtung beschickbar ist.

Ferner betrifft die Erfindung ein Verfahren zum Herstellen einer Kautschukgrundmischung für die Produktion eines Fahrzeugreifens mittels einer Vorrichtung, mit den Schritten: Zuführen einer ersten Menge einer Vorstufenmaterialmischung in eine Mischkammer einer ersten Mischeinrichtung der Vorrichtung und Beschicken einer Mischkammer einer zweiten Mischeinrichtung der Vorrichtung mit einer Zwischenmischung aus der Mischkammer der ersten Mischeinrichtung, wobei die Zwischenmischung die erste Menge an Vorstufenmaterialmischung umfasst.

Im Allgemeinen erfolgt die Herstellung einer Kautschukmischung in mindestens zwei Mischstufen, nämlich durch Herstellung einer Kautschukgrundmischung und einer Kautschukfertigmischung. Während der Herstellung der Kautschukgrundmischung werden alle Bestandteile der Mischung, wie Kautschuke, Füllstoffe, Verarbeitungsmittel, Alterungsschutzmittel, Ozonschutzmittel und weitere übliche Zusatzstoffe mit Ausnahme der Vulkanisationschemikalien (Schwefel, Vulkanisationsbeschleuniger, Harze u. A.) miteinander unter Energieeintrag vermischt. Nach der Fertigstellung der Kautschukgrundmischung, deren Abkühlung und eventueller Lagerung werden dann zur Herstellung der Fertigmischung die restlichen Zusatzstoffe, wie beispielsweise die Vulkanisationsbestandteile, bei niedrigeren Temperaturen eingemischt. Die vorliegende Erfindung betrifft insbesondere die Herstellung einer Kautschukgrundmischung, welche im Nachgang zu einer Kautschukfertigmischung weiterverarbeitet werden kann.

Bei der Herstellung entsprechender Kautschukmischungen werden neben den bekannten Single-Mischern auch sogenannte Tandem-Mischer eingesetzt, welche eine Obermaschine und eine unterhalb der Obermaschine angeordnete Untermaschine umfassen. Die Obermaschine verfügt über einen sogenannten Stempelkneter, wobei die Untermaschine üblicherweise mit einer stempellosen Kneteinrichtung ausgestattet ist. Derartige Tandem-Mischer sind beispielsweise aus den Druckschriften EP 0 618 055 A1 und WO 2017/097452 A1 bekannt.

Die Untermaschinen bekannter Tandem-Mischer können im Rahmen einer automatisierten Materialzuführung bisher ausschließlich mit Materialien in einem festen Aggregatzustand beschickt werden. Beispielsweise offenbart die Druckschrift DE 10 2015 224 798 A1 die Zugabe von Feststoffen in die Untermaschine eines Tandem-Mischers bei der Herstellung einer Kautschukfertigmischung.

Flüssige Bestandteile müssen bisher entweder der Obermaschine zugeführt werden oder sind durch einen Maschinenbediener manuell in eine Mischkammer des Tandem-Mischers einzufüllen, falls die Mischerkonstruktion dies erlaubt. Das Eindosieren von Flüssigkeiten in die Mischkammer der Untermaschine ist bei den bekannten Tandem-Mischern bisher nicht möglich.

Ferner besteht das Problem, dass der Stempelkneter der Obermaschine üblicherweise ein vergleichsweise geringes Fassungsvermögen hat, sodass die Menge der chargenweise herstellbaren Kautschukmischung durch das Volumen der Obermaschine beschränkt wird. Die stempellos arbeitende Untermaschine eines Tandem-Mischers weist häufig ein größeres Fassungsvermögen als die Obermaschine auf. Aus der Druckschrift DE 10 2016 222 622 A1 ist beispielsweise die Herstellung einer Kautschukgrundmischung in der Obermaschine bekannt, wobei die Druckschrift vorschlägt, die in der Obermaschine hergestellte Kautschukgrundmischung nach Abschluss eines Ausformvorgangs in die Untermaschine zu überführen, um dort unter Zugabe von Vulkanisationschemikalien die Kautschukfertigmischung herzustellen.

Bei dieser und bei anderen Anwendungen eines Tandem-Mischers wird das größere Fassungsvermögen der Untermaschine aufgrund der begrenzten Beladekapazität der Obermaschine nicht voll ausgenutzt. Insofern wird die Effizienz bei der Herstellung der Kautschukmischung bisher durch das Fassungsvermögen der Obermaschine begrenzt.

Die der Erfindung zugrundeliegende Aufgabe besteht somit darin, die Möglichkeiten der Materialzugabe bei der Herstellung von Kautschukgrundmischungen zu erweitern und eine Effizienzsteigerung bei der Herstellung von Kautschukgrundmischungen zu ermöglichen.

Die Aufgabe wird gelöst durch eine Vorrichtung der eingangs genannten Art, wobei die erfindungsgemäße Vorrichtung ein Flüssigkeitseinleitsystem umfasst, mittels welchem Flüssigkeit in die Mischkammer der zweiten Mischeinrichtung einleitbar ist.

Die Erfindung macht sich die Erkenntnis zunutze, dass mittels eines Flüssigkeitseinleitsystems eine direkte und präzise Beimengung von flüssigen Rohmaterialien in die Untermaschine ermöglicht wird. Darüber hinaus kann mittels des Flüssigkeitseinleitsystems die manuelle Einfüllung von Flüssigkeiten durch einen Maschinenbediener in die Untermaschine vermieden werden. Dadurch, dass Flüssigkeiten in die Mischkammer der zweiten Mischeinrichtung einleitbar sind, können Instabilitäten im Mischprozess reduziert werden, welche sonst durch Gleiteffekte von weichen Rohmaterialien mit geringer Viskosität hervorgerufen werden. Durch die Möglichkeit, Flüssigkeiten direkt in die Mischkammer der zweiten Mischeinrichtung einleiten zu können, kann die beabsichtigte Homogenität und/oder Viskosität mit einem geringeren Arbeits- und Zeitaufwand erreicht werden.

In einer bevorzugten Ausführungsform der erfindungsgemäßen Vorrichtung ist mittels des Flüssigkeitseinleitsystems auch Flüssigkeit in die Mischkammer der ersten Mischeinrichtung einleitbar. In diesem Fall kann das Flüssigkeitseinleitsystem also zum Einleiten von Flüssigkeit in die Mischkammern der ersten und der zweiten Mischeinrichtung eingesetzt werden. Die Einleitung von Flüssigkeit in die Mischkammern der ersten und der zweiten Mischeinrichtung mittels des Flüssigkeitseinleitsystems kann dabei unabhängig voneinander erfolgen. Mithin können mittels des Flüssigkeitseinleitsystems auch unterschiedliche Flüssigkeiten in die Mischkammern der ersten und der zweiten Mischeinrichtung eingeleitet werden. Das Einleiten von Flüssigkeit in die Mischkammern der ersten und der zweiten Mischeinrichtung kann gleichzeitig erfolgen. Ferner kann auch nur in die Mischkammer einer Mischeinrichtung Flüssigkeit mittels des Flüssigkeitseinleitsystems eingeleitet werden.

Die Flüssigkeit, welche in die Mischkammer der ersten und/oder der zweiten Mischeinrichtung einleitbar ist, kann beispielsweise Öl sein. Ferner kann die Flüssigkeit einen oder mehrere flüssige Weichmacher, Verarbeitungshilfsmittel, Alterungsschutzmittel, Ozonschutzmittel oder andere flüssige oder verflüssigte Zusatzstoffe, wie z.B. Silane oder flüssige Polymere umfassen. Die Weichmacher können aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL), bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt, sein. Ein Weichmacher kann ein Kohlenwasserstoffharz, ein Flüssig-Polymer oder ein Mineralöl sein. Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenische Öle. Die Silane können bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann, sein. Bei der letztgenannten Gruppe kann es sich z. B. um die folgenden chemischen Gruppen handeln: -SCN, -SH, -NH2 oder-Sx- (mit x = 2 bis 8). So können als Silan-Kupplungsagenzien z.B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden.

Die erste und die zweite Mischeinrichtung oder zumindest deren Mischkammern sind vorzugsweise übereinander angeordnet. Bei der Vorrichtung handelt es sich vorzugsweise um einen Tandem-Mischer. Die erste Mischeinrichtung bildet vorzugsweise eine Obermaschine. Die zweite Mischeinrichtung bildet vorzugsweise eine Untermaschine. Das Mischaggregat der ersten Mischeinrichtung kann ein Stempelkneter sein. Das Mischaggregat der zweiten Mischeinrichtung kann ein stempelloser Kneter sein. Vorzugsweise erfolgt in der ersten Mischeinrichtung die Herstellung einer beabsichtigten Vordispersion, wobei die untere Mischeinrichtung insbesondere zur Verringerung der Viskosität eingesetzt wird.

Die erfindungsgemäße Vorrichtung kann neben dem Flüssigkeitseinleitsystem auch ein Beladesystem für Feststoffe umfassen. Das Beladesystem kann beispielsweise eine Fördereinrichtung umfassen, über welche der Mischkammer der ersten und/oder der zweiten Mischeinrichtung Vorstufenmaterialmischungen oder andere Materialien, wie etwa chemische Zusätze, zugeführt werden können. Die Fördereinrichtung kann beispielsweise ein oder mehrere Förderbänder umfassen, mittels welchen die Materialförderung zu den Mischkammern der ersten und/oder der zweiten Mischeinrichtung umgesetzt wird.

Die erfindungsgemäße Vorrichtung wird ferner dadurch vorteilhaft weitergebildet, dass das Flüssigkeitseinleitsystem eine Dosiereinheit umfasst, mittels welcher die Einleitung einer vorgegebenen Menge an Flüssigkeit in die Mischkammer der ersten und/oder der zweiten Mischeinrichtung veranlassbar ist. Zum Eindosieren der vorgegebenen Menge an Flüssigkeit kann die Dosiereinheit einen Durchflussmesser umfassen, über welchen der Durchfluss an Flüssigkeit durch ein Leitungssystem des Flüssigkeitseinleitsystems erfassbar ist. Ferner kann die Dosiereinheit ein Ventil umfassen, welches in einer Zuführleitung des Flüssigkeitseinleitsystems angeordnet ist. Wenn über den Durchflussmesser erfasst wird, dass die vorgegebene Menge an Flüssigkeit in die Mischkammer der ersten und/oder der zweiten Mischeinrichtung eingeleitet wurde, kann die Flüssigkeitszuführung über das Ventil gesperrt bzw. unterbrochen werden. Das Ventil in der Zuführleitung kann beispielsweise als Weiche dienen. Alternativ oder zusätzlich zu dem Durchflussmesser kann die Dosiereinheit eine Wiegeeinheit umfassen, über welche die Beladung eines Vorratstanks für die Flüssigkeit überwachbar ist. Über eine entsprechende Wiegeeinheit kann ebenfalls die Eindosierung einer vorgegebenen Menge an Flüssigkeit umgesetzt werden. Ferner kann die Dosiereinheit eine Ölwaage oder einen Kolbendosierer zum Eindosieren einer vorgegebenen Menge an Flüssigkeit in die Mischkammer der ersten und/oder der zweiten Mischeinrichtung umfassen. Bei einem Kolbendosierer wird das Volumen der Flüssigkeit gemessen und dann auf Grundlage der bekannten Dichte der Flüssigkeit das Flüssigkeitsgewicht berechnet. Das Flüssigkeitseinleitsystem kann ferner dazu eingerichtet sein, unterschiedliche Flüssigkeiten in die Mischkammer der ersten und/oder der zweiten Mischeinrichtung einzuleiten. In diesem Fall kann über das Flüssigkeitseinleitsystem ein sogenanntes Multi-Dosing umgesetzt werden.

In einer weiteren bevorzugten Ausführungsform der erfindungsgemäßen Vorrichtung weist das Flüssigkeitseinleitsystem einen Vorratstank für die in die Mischkammer der ersten und/oder der zweiten Mischeinrichtung einzuleitende Flüssigkeit auf. In dem Vorratstank wird die einzuleitende Flüssigkeit bevorratet. Der Vorratstank ist vorzugsweise mit der Dosiereinheit verbunden. Das Flüssigkeitseinleitsystem kann ferner mehrere Vorratstanks für unterschiedliche Flüssigkeiten aufweisen. In diesem Fall kann das Flüssigkeitseinleitsystem auch eine Vormischkammer für unterschiedliche Flüssigkeiten umfassen, in welcher eine Flüssigkeitsmischung erzeugt wird, welche dann in die Mischkammer der ersten und/oder der zweiten Mischeinrichtung eingeleitet werden kann. Das Flüssigkeitseinleitsystem kann eine Steuerungseinrichtung umfassen, welche das Einleiten der Flüssigkeit aus dem Vorratstank in die Mischkammer der ersten und/oder der zweiten Mischeinrichtung steuert. Über die Steuerungseinrichtung kann auch das Eindosieren einer vorgegebenen Flüssigkeitsmenge in die Mischkammer der ersten und/oder der zweiten Mischeinrichtung gesteuert werden. Beispielsweise ist die Steuerungseinrichtung dazu eingerichtet, eine drehmomentgesteuerte Einspritzung der Flüssigkeit in die Mischkammer der ersten und/oder der zweiten Mischeinrichtung zu veranlassen. Die drehmomentgesteuerte Einspritzung kann beispielsweise über eine drehmomentabhängige Steuerung einer Förderpumpe der Flüssigkeit oder eines Dosierventils für die Flüssigkeit erfolgen. Die Einspritzung von Flüssigkeit in die Mischkammer der ersten Mischeinrichtung kann dabei in Abhängigkeit des anliegenden Drehmoments an einem oder mehreren Rotoren in der Mischkammer der ersten Mischeinrichtung erfolgen. Die Einspritzung von Flüssigkeit in die Mischkammer der zweiten Mischeinrichtung kann dabei in Abhängigkeit des anliegenden Drehmoments an einem oder mehreren Rotoren in der Mischkammer der zweiten Mischeinrichtung erfolgen. Eine übermäßige Einspritzung von Flüssigkeit kann zur Bildung eines Schmierfilms auf den Rotoren führen, wodurch ein Drehmomentabfall und eine erhebliche Beeinträchtigung der Knetwirkung resultiert. Über die drehmomentgesteuerte Einspritzung wird eine übermäßige Einspritzung von Flüssigkeit vermieden und es kann ein Mindestdrehmoment an den Rotoren gewährleistet werden. Die Steuerungseinrichtung kann dazu eingerichtet sein, eine kontinuierliche und/oder eine gepulste Einspritzung der Flüssigkeit zu veranlassen.

Es ist außerdem eine erfindungsgemäße Vorrichtung bevorzugt, bei welcher das Flüssigkeitseinleitsystem ein oder mehrere Flüssigkeitsleitungen umfasst, welche die Mischkammer der ersten und/oder der zweiten Mischeinrichtung fluidleitend mit der Dosiereinheit und/oder dem Vorratstank verbinden. Die Flüssigkeitsleitungen können beispielsweise Schläuche, Kanäle und/oder Rohre sein. Das Flüssigkeitseinleitsystem umfasst vorzugsweise eine Förderpumpe, über welche die Flüssigkeit in Richtung der Mischkammer der ersten und/oder der zweiten Mischeinrichtung förderbar ist. Das Flüssigkeitseinleitsystem kann auch mehrere Förderpumpen aufweisen.

In einer anderen bevorzugten Ausführungsform der erfindungsgemäßen Vorrichtung umfasst die Bewandung der Mischkammer der ersten und/oder der zweiten Mischeinrichtung eine oder mehrere Einlassöffnungen, über welche Flüssigkeit mittels des Flüssigkeitseinleitsystems in die Mischkammer der ersten und/oder der zweiten Mischeinrichtung einleitbar ist. Über die eine oder die mehreren Einlassöffnungen in der Bewandung der Mischkammer der ersten und/oder der zweiten Mischeinrichtung wird die Flüssigkeit also direkt und unmittelbar in die Mischkammern eingebracht. Über mehrere in der Bewandung angeordnete Einlassöffnungen kann erreicht werden, dass die beabsichtigte Homogenität der Mischung schneller erreicht wird.

Vorzugsweise weist die Mischkammer der ersten und/oder der zweiten Mischeinrichtung jeweils zumindest zwei Kammerabschnitte auf, wobei ein erster Kammerabschnitt einem ersten Rotor des jeweiligen Mischaggregats und ein zweiter Kammerabschnitt einem zweiten Rotor des jeweiligen Mischaggregats zugeordnet ist. Vorzugsweise weist sowohl die Bewandung des ersten Kammerabschnitts als auch die Bewandung des zweiten Kammerabschnitts eine oder mehrere Einlassöffnungen für die Flüssigkeit auf, sodass die Flüssigkeit direkt und unmittelbar in beide Kammerabschnitte eingeleitet wird. Alternativ oder zusätzlich können in der Bewandung der Übergabeeinrichtung zwischen der ersten und der zweiten Mischeinrichtung ein oder mehrere Einlassöffnungen vorhanden sein, über welche die Flüssigkeit mittels des Flüssigkeitseinleitsystems in die Mischkammer der zweiten Mischeinrichtung einleitbar ist. Insofern erfolgt die Flüssigkeitseinleitung indirekt über die Übergabeeinrichtung zwischen der ersten und der zweiten Mischeinrichtung.

In einer weiteren bevorzugten Ausführungsform der erfindungsgemäßen Vorrichtung umfasst das Flüssigkeitseinleitsystem eine oder mehrere Einspritzdüsen, über welche Flüssigkeit in die Mischkammer der ersten und/oder der zweiten Mischeinrichtung einspritzbar ist. Über die eine oder die mehreren Einspritzdüsen kann eine beabsichtigte Vernebelung oder Tröpfchenbildung beim Einspritzen der Flüssigkeit in die Mischkammer der ersten und/oder der zweiten Mischeinrichtung realisiert werden. Hierdurch kann die Erzeugung einer vorgegebenen Homogenität weiter beschleunigt werden.

Ferner kann das Beladesystem der erfindungsgemäßen Vorrichtung, über welches der Mischkammer der ersten und/oder der zweiten Mischeinrichtung Vorstufenmaterialmischungen zuführbar sind, eine oder mehrere Wiegeeinheiten umfassen, über welche die Menge der zugeführten Vorstufenmaterialmischungen und weiterer Rohmaterialien erfassbar ist. Die Wiegeeinheiten können beispielsweise in das Fördersystem integriert sein. Beispielsweise weisen die Förderbänder des Fördersystems einen Wiegeabschnitt auf, innerhalb welchem ein Wiegevorgang erfolgen kann. Die Vorrichtung kann eine Steuerungseinrichtung umfassen, welche das Fördersystem in Abhängigkeit der von der einen oder den mehreren Wiegeeinheiten erfassten Menge an zugeführter Vorstufenmaterialmischung steuert.

Die der Erfindung zugrundeliegende Aufgabe wird ferner durch ein Verfahren der eingangs genannten Art gelöst, wobei im Rahmen des erfindungsgemäßen Verfahrens eine zweite Menge der Vorstufenmaterialmischung und optional chemische Zusätze in die Mischkammer der zweiten Mischeinrichtung zugeführt wird. Das Zuführen der zweiten Menge der Vorstufenmaterialmischung in die Mischkammer der zweiten Mischeinrichtung erfolgt vorzugsweise vor dem Beschicken der Mischkammer der zweiten Mischeinrichtung mit der Zwischenmischung. Beim Beschicken der Mischkammer der zweiten Mischeinrichtung mit der Zwischenmischung befindet sich also bereits die zweite Menge der Vorstufenmaterialmischung in der Mischkammer der zweiten Mischeinrichtung. Alternativ kann das Zuführen der zweiten Menge der Vorstufenmaterialmischung in die Mischkammer der zweiten Mischeinrichtung auch nach dem Beschicken der Mischkammer der zweiten Mischeinrichtung mit der Zwischenmischung erfolgen. Das erfindungsgemäße Verfahren wird vorzugsweise mittels einer Vorrichtung nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen der erfindungsgemäßen Vorrichtung verwiesen.

Die in der Obermaschine hergestellte Zwischenmischung kann in einer Ausführungsform chemische Zusätze umfassen. In einer anderen Ausführungsform umfasst die in der Obermaschine hergestellte Zwischenmischung keine chemischen Zusätze.

Die Vorstufenmaterialmischung umfasst vorzugsweise Kautschuk. Der Kautschuk kann Dienkautschuk sein. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Der Dienkautschuk ist dabei bevorzugt ausgewählt aus der Gruppe bestehend aus natürlichem Polyisopren, synthetischem Polyisopren, epoxidiertem Polyisopren, Butadien-Kautschuk, Butadien-Isopren-Kautschuk, lösungspolymerisiertem Styrol-Butadien-Kautschuk, emulsionspolymerisiertem Styrol-Butadien-Kautschuk, Styrol-Isopren-Kautschuk, Flüssigkautschuken mit einem Molekulargewicht Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien- Kautschuk und hydriertem Styrol-Butadien-Kautschuk. Insbesondere Nitrilkautschuk, hydrierter acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk. Die hergestellte Kautschukmischung ist damit insbesondere für Fahrzeugreifen geeignet.

Gemäß besonders vorteilhaften Ausführungsformen der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Gemäß einer ganz besonders vorteilhaften Ausführungsform der Erfindung ist der Kautschuk natürliches Polyisopren (NR; Naturkautschuk).

Die Mischkammer der ersten Mischeinrichtung hat beispielsweise ein geringeres Fassungsvermögen als die Mischkammer der zweiten Mischeinrichtung und stellte somit bisher den limitierenden Faktor hinsichtlich der chargenweise herstellbaren Menge an Kautschukgrundmischung dar. Dadurch, dass nun eine zweite Menge der gleichen Vorstufenmaterialmischung in die Mischkammer der zweiten Mischeinrichtung zugeführt wird, können insgesamt größere Mengen einer Kautschukgrundmischung hergestellt werden, ohne dass es zu einer Beeinträchtigung des Homogenitätsniveaus der erzeugten Kautschukgrundmischung kommt. Das Fassungsvermögen der ersten Mischeinrichtung stellt somit nicht länger einen limitierenden Faktor dar.

Den Mischkammern beider Mischeinrichtungen wird im Rahmen des erfindungsgemäßen Verfahrens folglich die gleiche Vorstufenmaterialmischung zugeführt. Es können insgesamt größere Mengen an Kautschukgrundmischung hergestellt werden. Dies führt zu einer Effizienzsteigerung und zu einer Verringerung der Zykluszeit.

Außerdem kann eine Erhöhung des Mischgewichts beim Verwenden von Tandem-Mischern umgesetzt werden, welche die Einbringung von Material in die Untermaschine erlauben. Mittels des erfindungsgemäßen Verfahrens kann weiterhin die erforderliche Homogenität und/oder Viskosität der Kautschukgrundmischung erreicht werden. Es kommt zu einer effizienteren Nutzung der Untermaschine in Tandem-Prozessen. Außerdem werden instabile Mischprozesse aufgrund von hohen Chemikalienmengen vermieden. Das Durchrutschen kann durch Aufteilung der Chemikalien in Ober- und Untermaschine reduziert oder sogar vermieden werden. Derartige instabile Mischprozesse können zum Durchrutschen von Materialteilmengen führen, woraus erhebliche Homogenitätsbeeinträchtigungen resultieren können. In der Mischkammer der zweiten Mischeinrichtung wird im Rahmen des erfindungsgemäßen Verfahrens die zweite Menge der Vorstufenmaterialmischung mit der Zwischenmischung aus der ersten Mischeinrichtung gemischt.

Die Kautschukfertigmischung kann nach dem Entnehmen der erfindungsgemäß hergestellten Kautschukgrundmischung aus der Vorrichtung vorrichtungsextern hergestellt werden.

Das erfindungsgemäße Verfahren wird ferner dadurch vorteilhaft weitergebildet, dass ein Fördern der ersten Menge der Vorstufenmaterialmischung zu der Mischkammer der ersten Mischeinrichtung mittels eines Fördersystems der Vorrichtung erfolgt. Das Fördersystem der Vorrichtung ist vorzugsweise mit einem Beladesystem der Vorrichtung verbunden, über welches die erste Menge der Vorstufenmaterialmischung in die Mischkammer der ersten Mischeinrichtung eingegebenen werden kann. Ferner kann das Verfahren das Fördern der zweiten Menge der Vorstufenmaterialmischung zu der Mischkammer der zweiten Mischeinrichtung mittels einer Fördersystems der Vorrichtung umfassen. Insbesondere erfolgt ein Zuführen von chemischen Zusätzen in die Mischkammer der ersten und/oder der zweiten Mischeinrichtung der Vorrichtung. Das Fördersystem der Vorrichtung kann eine oder mehrere Wiegeeinheiten und/oder Förderbänder umfassen. Die chemischen Zusätze werden vorzugsweise in einem festen Aggregatzustand zugeführt, beispielsweise als Pulver. Die chemischen Zusätze sind vorzugsweise ausgewählt aus der Gruppe bestehend aus: Alterungsschutzmittel, wie die der Familie der PPD (Phenylendiamine) und dabei z. B. N-Phenyl-N'-(1,3-dimethylbutyl)-p-phenylendiamin (6PPD), N,N'-Diphenyl-pphenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), Aktivatoren, wie z. B. Zinkoxid und Fettsäuren (z. B. Stearinsäure) und/oder sonstige Aktivatoren, wie Zinkkomplexe wie z.B. Zinkethylhexanoat, Wachse, Kohlenwasserstoffharze, wie Klebharze, Mastikationshilfsmittel, wie z. B. 2,2'-Dibenzamidodiphenyldisulfid (DBD), Prozesshilfsmittel, wie insbesondere Fettsäureester und Metallseifen, wie z.B. Zinkseifen und/oder Calciumseifen, Weichmacher, und Kupplungsagenzien für Füllstoffe, wie insbesondere Silan-Kupplungsagenzien für die Anbindung von Kieselsäure oder Agenzien für die Anbindung von Füllstoffen wie Ruß, beispielsweise die in der EP 2589619 A1 offenbarte Verbindung S-(3-Aminopropyl) Thioschwefelsäure und/oder deren Metallsalze.

Das erfindungsgemäße Verfahren wird ferner dadurch vorteilhaft weitergebildet, dass eine Flüssigkeit in die Mischkammer der ersten und/oder der zweiten Mischeinrichtung mittels eines Flüssigkeitseinleitsystems der Vorrichtung eingeleitet wird. Insbesondere erfolgt ein Abdosieren einer vorgegebenen Menge an in die Mischkammer der ersten und/oder der zweiten Mischeinrichtung einzuleitenden Flüssigkeit mittels einer Dosiereinheit der Vorrichtung. Die Flüssigkeit kann über ein oder mehrere Einlassöffnungen in der Bewandung der Mischkammer der ersten und/oder der zweiten Mischeinrichtung in die Mischkammer der ersten und/oder der zweiten Mischeinrichtung eingeleitet werden. Ferner kann die abdosierte Menge an Flüssigkeit auch über ein oder mehrere Einspritzdüsen in die Mischkammer der ersten und/oder der zweiten Mischeinrichtung eingespritzt werden.

In einer vorteilhaften Weiterbildung des Verfahrens erfolgt ein Vorwärmen der ersten Menge der Vorstufenmaterialmischung innerhalb und/oder außerhalb der Mischkammer der ersten Mischeinrichtung der Vorrichtung, ein Vorwärmen der Zwischenmischung innerhalb und/oder außerhalb der Mischkammer der ersten Mischeinrichtung der Vorrichtung und/oder ein Vorwärmen der zweiten Menge der Vorstufenmaterialmischung innerhalb und/oder außerhalb der Mischkammer der zweiten Mischeinrichtung der Vorrichtung. Die erste und/oder die zweite Menge der Vorstufenmaterialmischung und/oder die Zwischenmischung können also kammerintern und/oder kammerextern vorgewärmt werden. Durch die Vorwärmung können die Viskositäten und/oder Temperaturen der Zwischenmischung und der zweiten Menge der Vorstufenmaterialmischung aneinander angepasst werden, sodass in der Mischkammer der zweiten Mischeinrichtung eine homogene Masse erzeugt werden kann. Durch das Vorwärmen der zweiten Menge an Vorstufenmaterialmischung wird vermieden, dass eine aufgrund des Knetvorgangs in der Mischkammer der ersten Mischeinrichtung erwärmte Zwischenmischung in der Mischkammer der zweiten Mischeinrichtung mit einer kalten Vorstufenmaterialmischung vermengt wird. Das Vorwärmen kann durch den Mischvorgang in der jeweiligen Mischkammer erfolgen. Alternativ oder zusätzlich kann die Vorrichtung eine Heizeinrichtung umfassen, mittels welcher die erste Menge der Vorstufenmaterialmischung und/oder die Zwischenmischung innerhalb und/oder außerhalb der Mischkammer der ersten Mischeinrichtung und/oder mittels welcher die zweite Menge der Vorstufenmaterialmischung innerhalb und/oder außerhalb der Mischkammer der zweiten Mischeinrichtung vorgewärmt werden kann. Die Heizeinrichtung kann eine elektrische Heizeinrichtung und/oder eine Strahlungsheizung sein. Wenn die Heizeinrichtung eine Strahlungsheizung ist, kann diese beispielsweise eine Infrarot-Heizung sein. Die Heizeinrichtung kann ferner eine Flächenheizung oder ein Heizgebläse sein.

Das erfindungsgemäße Verfahren wird ferner dadurch vorteilhaft weitergebildet, dass das sich in der Mischkammer der ersten Mischeinrichtung befindende und die erste Menge der Vorstufenmaterialmischung umfassende Material mittels eines Mischaggregats der ersten Mischeinrichtung zur Zwischenmischung gemischt wird. Alternativ oder zusätzlich wird das sich in der Mischkammer der zweiten Mischeinrichtung befindende und die Zwischenmischung und die zweite Menge an Vorstufenmaterialmischung umfassende Material mittels eines Mischaggregats der zweiten Mischeinrichtung gemischt. Das Mischaggregat der ersten Mischeinrichtung kann ein Stempelkneter sein. Der Stempelkneter kann einen hydraulischen Knetstempel umfassen. Das Mischaggregat der ersten Mischeinrichtung kann einen oder mehrere Rotoren aufweisen. Das Mischaggregat der zweiten Mischeinrichtung kann ein stempelloser Kneter sein. Das Mischaggregat der zweiten Mischeinrichtung kann einen oder mehrere Rotoren aufweisen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Vorrichtung zum Herstellen einer Kautschukmischung in einer schematischen Darstellung; und
- Fig. 2: ein Ausführungsbeispiel des erfindungsgemäßen Verfahrens zum Herstellen einer Kautschukmischung im Vergleich mit dem Stand der Technik in einer schematischen Darstellung.

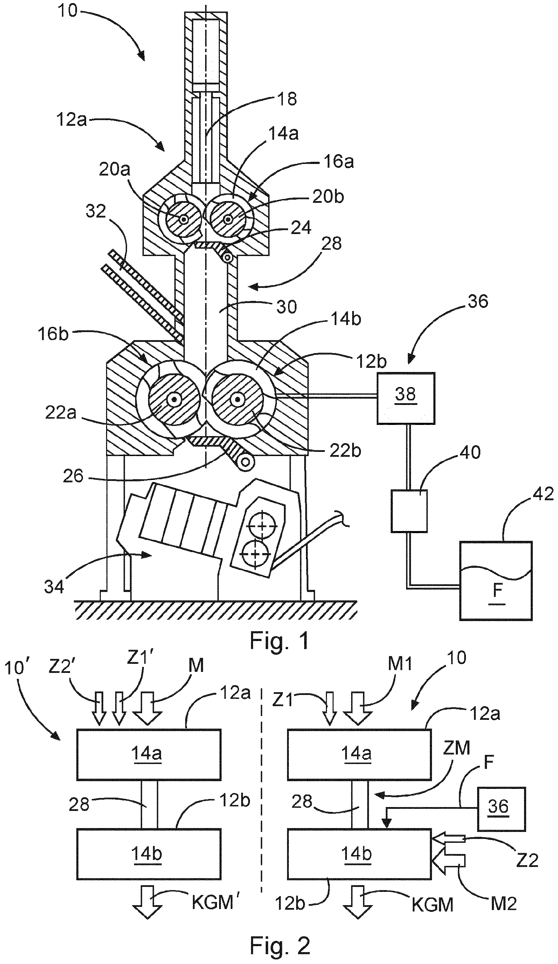

Die Fig. 1 zeigt eine als Tandem-Mischer ausgebildete Vorrichtung 10 zum Herstellen einer Kautschukmischung. Die Vorrichtung 10 wird vorliegend zur Herstellung einer Kautschukgrundmischung KGM eingesetzt, welche für die Produktion von Fahrzeugreifen Verwendung findet.

Die Vorrichtung 10 umfasst zwei übereinander angeordnete Mischeinrichtungen 12a, 12b. Die erste Mischeinrichtung 12a bildet eine Obermaschine der Vorrichtung 10, wobei die zweite Mischeinrichtung 12b eine Untermaschine der Vorrichtung 10 bildet. Die Mischeinrichtungen 12a, 12b weisen jeweils eine Mischkammer 14a, 14b und ein Mischaggregat 16a, 16b zum Mischen des sich in der jeweiligen Mischkammer 14a, 14b befindenden Materials auf.

Das Mischaggregat 16a der ersten Mischeinrichtung 12a ist ein Stempelkneter und umfasst einen hydraulischen Knetstempel 18 sowie zwei Rotoren 20a, 20b. Das Mischaggregat 16b der zweiten Mischeinrichtung 12b ist ein stempelloser Kneter und umfasst die Rotoren 22a, 22b.

Zwischen den Mischeinrichtungen 12a, 12b befindet sich eine Übergabeeinrichtung 28, mittels welcher die Mischkammer 14b der zweiten Mischeinrichtung 12b direkt mit Material aus der Mischkammer 14a der ersten Mischeinrichtung 12a beschickbar ist. Zum Beschicken der Mischkammer 14b der zweiten Mischeinrichtung 12b ist die Entladeklappe 24 der ersten Mischeinrichtung 12a zu öffnen, sodass das Material aus der ersten Mischkammer 14a der Mischeinrichtung 12a durch den Übergabeschacht 30 der Übergabeeinrichtung 28 unter Schwerkrafteinwirkung in die Mischkammer 14b der zweiten Mischeinrichtung 12b fällt. Die zweite Mischeinrichtung 12b umfasst ebenfalls eine Entladeklappe 26, über welche das in der Mischkammer 14b der zweiten Mischeinrichtung 12b befindliche Material an das Ausformaggregat 34 übergeben werden kann.

In den Übergabeschacht 30 der Übergabeeinrichtung 28 mündet ein Beladeschacht 32 ein, über welchen der Mischkammer 14b der zweiten Mischeinrichtung 12b Material zugeführt werden kann.

Die Vorrichtung 10 umfasst ein Flüssigkeitseinleitsystem 36, mittels welchem Flüssigkeit F in die Mischkammer 14b der zweiten Mischeinrichtung 12b einleitbar ist. Das Flüssigkeitseinleitsystem 36 weist einen Vorratstank 42 auf, in welchem die Flüssigkeit F bevorratet wird. Der Vorratstank 42 ist über eine Förderpumpe 40 mit einer Dosiereinheit 38 des Flüssigkeitseinleitsystems 36 verbunden. Über die Förderpumpe 40 kann die Flüssigkeit F aus dem Vorratstank 42 in die Mischkammer 14b der Mischeinrichtung 12b gefördert werden.

Im Betrieb der Förderpumpe 40 wird die Flüssigkeit F aus dem Vorratstank 42 zunächst der Dosiereinheit 38 zugeführt, mittels welcher eine vorgegebene Menge an Flüssigkeit F in die Mischkammer 14b der Mischeinrichtung 12b eindosierbar ist. Hierzu ist die Dosiereinheit 38 dazu eingerichtet, den Durchfluss an Flüssigkeit F mittels eines Kolbendosierers zu erfassen. Über ein Ventil lässt sich nach Erreichen der gewünschten Durchflussmenge die Einleitung weiterer Flüssigkeit F in die Mischkammer 14b der Mischeinrichtung 12b verhindern. Hierzu kann über das Ventil eine Zuführleitung zu der Mischkammer 14b der zweiten Mischeinrichtung 12b gesperrt werden. Das Ventil kann über eine Steuerungseinrichtung des Flüssigkeitseinleitsystems 36 gesteuert werden.

Alternativ oder zusätzlich kann auch der Betrieb der Förderpumpe 40 unterbrochen werden. Der Betrieb der Förderpumpe 40 kann ebenfalls über die Steuerungseinrichtung des Flüssigkeitseinleitsystems 36 gesteuert werden.

Das Flüssigkeitseinleitsystem 36 umfasst mehrere Flüssigkeitsleitungen, welche beispielsweise als Schläuche oder Rohre ausgebildet sein können. Die Flüssigkeitsleitungen verbinden die Mischkammer 14b der zweiten Mischeinrichtung 12b fluidleitend mit der Dosiereinheit 38 und dem Vorratstank 42 des Flüssigkeitseinleitsystems 36.

In der Bewandung der Mischkammer 14b der zweiten Mischeinrichtung 12b ist eine Einlassöffnung angeordnet, über welche die Flüssigkeit F in die Mischkammer 14b der zweiten Mischeinrichtung 12b einleitbar ist. Das Flüssigkeitseinleitsystem 36 kann auch eine oder mehrere Einspritzdüsen umfassen, über welche die Flüssigkeit F in die Mischkammer 14b der zweiten Mischeinrichtung 12b einspritzbar ist.

Der Mischkammer 14b der Mischeinrichtung 12b kann eine Vorstufenmaterialmischung über den Beladeschacht 32 und über nicht dargestellte Förderbänder zugeführt werden. Ebenso können chemische Zusätze über den Beladeschacht 32 über das selbe oder ein zweites Förderband hinzugegeben werden.

Die Fig. 2 zeigt auf der linken Seite ein aus dem Stand der Technik bekanntes Verfahren zum Herstellen einer Kautschukgrundmischung KGM' mittels einer Vorrichtung 10'. Auf der rechten Seite ist der Ablauf des erfindungsgemäßen Verfahrens zum Herstellen einer Kautschukgrundmischung KGM dargestellt. Die hergestellten Kautschukgrundmischungen KGM', KGM können auch als Master-Batch bezeichnet werden.

Bei dem aus dem Stand der Technik bekannten Verfahren wird einer Mischkammer 14a einer ersten Mischeinrichtung 12a der Vorrichtung 10' eine Menge M einer Vorstufenmaterialmischung zugeführt. Zusätzlich werden der Mischkammer 14a chemische Zusätze Z1', Z2' zugeführt. Bei Z1' und Z2' kann es sich jeweils um einen oder um mehr als einen chemischen Zusatz handeln. Die Menge M der Vorstufenmaterialmischung und die chemischen Zusätze Z1', Z2' werden dann in der Mischkammer 14a der Mischeinrichtung 12a miteinander vermischt, bevor die Mischung über die Übergabeeinrichtung 28 der Mischkammer 14b der Mischeinrichtung 12b zugeführt wird. In der Mischeinrichtung 12b erfolgt keine weitere Materialzugabe. In der Mischkammer 14b der Mischeinrichtung 12b erfolgt lediglich eine Verringerung des Viskositätsniveaus und eine weitere Durchmischung zur Sicherstellung der Homogenität, bevor die Kautschukgrundmischung KGM' aus der Vorrichtung 10' entnommen wird.

Bei dem erfindungsgemäßen Verfahren wird zunächst einer ersten Mischeinrichtung 12a der Vorrichtung 10 eine erste Menge M1 einer Vorstufenmaterialmischung zugeführt. Neben der ersten Menge M1 an Vorstufenmaterialmischung werden der Mischkammer 14a der Mischeinrichtung 12a optional chemische Zusätze Z1 beigegeben. Z1 kann einen oder mehr als einen chemischen Zusatz umfassen. Nach dem Mischen der ersten Menge M1 an Vorstufenmaterialmischung und der chemischen Zusätze Z1 wird die Mischkammer 14b der zweiten Mischeinrichtung 12b der Vorrichtung 10 mit der in der ersten Mischeinrichtung 12a hergestellten Zwischenmischung ZM beschickt.

Die Zwischenmischung ZM, welche die erste Menge M1 an Vorstufenmaterialmischung und die chemischen Zusätze Z1 umfasst, wird über einen Übergabeschacht der Übergabeeinrichtung 28 unter Schwerkrafteinwirkung an die Mischkammer 14b der zweiten Mischeinrichtung 12b übergeben. Der Mischkammer 14b der zweiten Mischeinrichtung 12b wird vor dem Beschicken der Mischkammer 14b mit der Zwischenmischung ZM eine zweite Menge M2 der Vorstufenmaterialmischung zugeführt. Außerdem werden der Mischkammer 14b der zweiten Mischeinrichtung 12b optional weitere chemische Zusätze Z2 zugeführt. Aus der Zwischenmischung ZM, der zweiten Menge M2 der Vorstufenmaterialmischung und den chemischen Zusätzen Z2 wird in der zweiten Mischeinrichtung 12b die Kautschukgrundmischung KGM hergestellt, wobei diese in ihrer Zusammensetzung und ihren Eigenschaften der Kautschukgrundmischung KGM' entspricht. Optional kann der Mischkammer 14b der zweiten Mischeinrichtung 12b Flüssigkeit F über das Flüssigkeitseinleitsystem 36 zugeführt werden.

Bei den Mischeinrichtungen 12a der Vorrichtungen 10, 10' handelt es sich jeweils um einen Stempelkneter mit einem vergleichsweise geringen Fassungsvermögen. Die Mischkammern 14b der Vorrichtungen 10, 10' weisen ein größeres Fassungsvermögen als die Mischkammern 14a auf. Bei dem aus dem Stand der Technik bekannten Verfahren (linke Darstellung in der Fig. 2) wird das größere Fassungsvermögen der Mischkammer 14b der Mischeinrichtung 12b nicht ausgenutzt, sodass das begrenzte Fassungsvermögen der Mischkammer 14a der Mischeinrichtung 12a als begrenzender Faktor wirkt. Bei dem erfindungsgemäßen Verfahren (rechte Abbildung in der Fig. 2) wird das größere Fassungsvermögen der Mischkammer 14b der Mischeinrichtung 12b durch das Zuführen einer zweiten Menge M2 der Vorstufenmaterialmischung ausgenutzt, sodass insgesamt eine größere Menge an Kautschukgrundmischung KGM hergestellt werden kann.

Beispielsweise werden bei dem aus dem Stand der Technik bekannten Verfahren 199 kg der Vorstufenmaterialmischung, 5,5 kg an chemischen Zusätzen Z1' und 4,4 kg an chemischen Zusätzen Z2' in die Mischkammer 14a der Mischeinrichtung 12a eingegeben. Da keine weitere Materialzugabe in der Mischeinrichtung 12b erfolgt, wird somit eine Gesamtmenge von ca. 208,9 kg Kautschukgrundmischung KGM' hergestellt.

Bei dem erfindungsgemäßen Verfahren werden beispielsweise 201 kg der Vorstufenmaterialmischung und 7,1 kg chemische Zusätze Z1 in die Mischkammer 14a der Mischeinrichtung 12a gegeben. In der Mischkammer 14b der Mischeinrichtung 12b werden später weitere 55 kg der gleichen Vorstufenmaterialmischung sowie 5,5 kg chemische Zusätze Z2 hinzugegeben. Somit kann mittels des erfindungsgemäßen Verfahrens ca. 30 % mehr Kautschukgrundmischung KGM hergestellt werden als im Vergleich zum Stand der Technik. Die Effektivität bei der Herstellung der Kautschukgrundmischung KGM wird also erheblich gesteigert.

### Bezugszeichenliste

- 10: Vorrichtung
- 10': Vorrichtung
- 12a, 12b: Mischeinrichtungen
- 14a, 14b: Mischkammern
- 16a, 16b: Mischaggregate
- 18: Knetstempel
- 20a, 20b: Rotoren
- 22a, 22b: Rotoren
- 24: Entladeklappe
- 26: Entladeklappe
- 28: Übergabeeinrichtung
- 30: Übergabeschacht
- 32: Beladeschacht
- 34: Ausformaggregat
- 36: Flüssigkeitseinleitsystem
- 38: Dosiereinheit
- 40: Förderpumpe
- 42: Vorratstank

- F: Flüssigkeit
- M, M1, M2: Mengen
- KGM', KGM: Kautschukgrundmischungen
- ZM: Zwischenmischung
- Z1', Z2': Zusätze
- Z1', Z2: Zusätze

## Patentansprüche

1. Vorrichtung (10) zum Herstellen einer Kautschukmischung, insbesondere einer Kautschukgrundmischung (KGM), für die Produktion eines Fahrzeugreifens, mit
- einer ersten und einer zweiten Mischeinrichtung (12a, 12b), welche jeweils eine Mischkammer (14a, 14b) und ein Mischaggregat (16a, 16b) zum Mischen eines sich in der Mischkammer (14a, 14b) befindenden Materials umfassen; und
- einer Übergabeeinrichtung (28), mittels welcher die Mischkammer (14b) der zweiten Mischeinrichtung (12b) direkt mit Material aus der Mischkammer (14a) der ersten Mischeinrichtung (12a) beschickbar ist;
**gekennzeichnet durch** ein Flüssigkeitseinleitsystem (36), mittels welchem Flüssigkeit (F) in die Mischkammer (14b) der zweiten Mischeinrichtung (12b) einleitbar ist.

2. Vorrichtung (10) nach Anspruch 1,
**dadurch gekennzeichnet, dass** mittels des Flüssigkeitseinleitsystems (36) Flüssigkeit (F) in die Mischkammer (14a) der ersten Mischeinrichtung (12a) einleitbar ist.

3. Vorrichtung (10) nach Anspruch 1 oder 2,
**dadurch gekennzeichnet, dass** das Flüssigkeitseinleitsystem (36) eine Dosiereinheit (38) umfasst, mittels welcher die Einleitung einer vorgegebenen Menge an Flüssigkeit (F) in die Mischkammer (14a, 14b) der ersten und/oder der zweiten Mischeinrichtung (12a, 12b) veranlassbar ist.

4. Vorrichtung (10) nach einem der vorstehenden Ansprüche,
**dadurch gekennzeichnet, dass** das Flüssigkeitseinleitsystem (36) einen Vorratstank (42) für die in die Mischkammer (14a, 14b) der ersten und/oder der zweiten Mischeinrichtung (12a, 12b) einzuleitende Flüssigkeit (F) aufweist.

5. Vorrichtung (10) nach Anspruch 3 oder 4,
**dadurch gekennzeichnet, dass** das Flüssigkeitseinleitsystem (36) eine oder mehrere Flüssigkeitsleitungen umfasst, welche die Mischkammer (14a, 14b) der ersten und/oder der zweiten Mischeinrichtung (12a, 12b) fluidleitend mit der Dosiereinheit (38) und/oder dem Vorratstank (42) verbinden.

6. Vorrichtung (10) nach einem der vorstehenden Ansprüche,
**dadurch gekennzeichnet, dass** die Bewandung der Mischkammer (14a, 14b) der ersten und/oder der zweiten Mischeinrichtung (12a, 12b) eine oder mehrere Einlassöffnungen umfasst, über welche Flüssigkeit (F) mittels des Flüssigkeitseinleitsystem (36) in die Mischkammer (14a, 14b) der ersten und/oder der zweiten Mischeinrichtung (12a, 12b) einleitbar ist.

7. Verfahren zum Herstellen einer Kautschukgrundmischung (KGM) für die Produktion eines Fahrzeugreifens mittels einer Vorrichtung (10), insbesondere mittels einer Vorrichtung (10) nach einem der vorstehenden Ansprüche, mit den Schritten:
- Zuführen einer ersten Menge (M1) einer Vorstufenmaterialmischung in eine Mischkammer (14a) einer ersten Mischeinrichtung (12a) der Vorrichtung (10); und
- Beschicken einer Mischkammer (14b) einer zweiten Mischeinrichtung (12b) der Vorrichtung (10) mit einer Zwischenmischung (ZM) aus der Mischkammer (14a) der ersten Mischeinrichtung (12a), wobei die Zwischenmischung (ZM) die erste Menge (M1) an Vorstufenmaterialmischung umfasst;
**gekennzeichnet durch** den Schritt:
- Zuführen einer zweiten Menge (M2) der Vorstufenmaterialmischung in die Mischkammer (14b) der zweiten Mischeinrichtung (12b), insbesondere vor dem Beschicken der Mischkammer (14b) der zweiten Mischeinrichtung (12b) mit der Zwischenmischung (ZM).

8. Verfahren nach Anspruch 7,
**gekennzeichnet durch** zumindest einen der folgenden Schritte:
- Fördern der ersten Menge (M1) der Vorstufenmaterialmischung zu der Mischkammer (14a) der ersten Mischeinrichtung (12a) mittels einer Fördersystems der Vorrichtung (10);
- Fördern der zweiten Menge (M2) der Vorstufenmaterialmischung zu der Mischkammer (14b) der zweiten Mischeinrichtung (12b) mittels einer Fördersystems der Vorrichtung (10);
- Zuführen von chemischen Zusätzen (Z1, Z2) in die Mischkammer (14a, 14b) der ersten und/oder der zweiten Mischeinrichtung (12a, 12b) der Vorrichtung (10).

9. Verfahren nach Anspruch 7 oder 8,
**gekennzeichnet durch** zumindest einen der folgenden Schritte:
- Einleiten einer Flüssigkeit (F) in die Mischkammer (14a, 14b) der ersten und/oder der zweiten Mischeinrichtung (12a, 12b) mittels eines Flüssigkeitseinleitsystems (36) der Vorrichtung (10);
- Abdosieren einer vorgegebenen Menge an in die Mischkammer (14a, 14b) der ersten und/oder der zweiten Mischeinrichtung (12a, 12b) einzuleitenden Flüssigkeit (F) mittels einer Dosiereinheit (38) der Vorrichtung (10).

10. Verfahren nach einem der Ansprüche 7 bis 9,
**gekennzeichnet durch** zumindest einen der folgenden Schritte:
- Vorwärmen der ersten Menge (M1) der Vorstufenmaterialmischung innerhalb und/oder außerhalb der Mischkammer (14a) der ersten Mischeinrichtung (12a) der Vorrichtung (10);
- Vorwärmen der Zwischenmischung (ZM) innerhalb und/oder außerhalb der Mischkammer (14a) der ersten Mischeinrichtung (12a) der Vorrichtung (10);
- Vorwärmen der zweiten Menge (M2) der Vorstufenmaterialmischung innerhalb und/oder außerhalb der Mischkammer (14b) der zweiten Mischeinrichtung (12b) der Vorrichtung (10);
